# EUROPEAN PATENT APPLICATION

(11) **EP 4 825 338 A2**
(43) Date of publication of application: **21.10.2026**
(21) Application number: 26187823.5
(22) Date of filing: 28.06.2023
(51) Int. Cl.: A61C 13/08

(54) **A BLANK FOR USE IN PREPARING A DENTAL BRIDGE COMPRISING AT LEAST ONE TRANSITION REGION**

(62) Document number(s) of the earlier application(s) in accordance with Art. 76 EPC: 23182054.9 / 4 483 839
(71) Applicant: DeguDent GmbH, 63457 Hanau (DE); DENTSPLY SIRONA Inc., York, PA 17401 (US)
(72) Inventor: VÖLKL, Lothar, 63457 Hanau (DE); GEBHARDT, Andreas, 63457 Hanau (DE); HAIZMANN,, Martin, 63457 Hanau (DE); FECHER,, Stefan, 63457 Hanau (DE)
(74) Representative: Crow, Martin

(57) **Abstract**

A blank (1) for use in preparing a dental restoration (2) such as a dental framework, in particular a dental bridge, the blank comprises at least one shading oxide of at least one metal element, wherein the blank comprises a core region (3), a shell region (4) and at least one transition region selected from the group comprising (9a), (9b), (9c) and (9d), wherein the core region (3) comprises at least one basic body having a substantially conical shape (5) and at least one basic body having a substantially trapezoidal shape (6), wherein the at least one basic body having a substantially conical shape (5) and the at least one basic body having a substantially trapezoidal shape (6) are merged one into another.

## Description

### BACKGROUND OF THE INVENTION

The invention relates, inter alia, to a blank for use in preparing a dental restoration, such as a dental framework, in particular a dental bridge, comprising zirconium dioxide, having preferably regions of a different composition and comprising at least one transition region.

EP 3174516 B1 discloses a kit of parts containing a dental mill blank containing a porous zirconia material having fluorescing properties, and a colouring solution for imparting colour to the zirconia material of the dental mill blank. There is suggested that the blank may be used for making dental bridges, but the idea has not been elaborated on in the patent specification. No specific data in respect of that are included. The patent is confined to profoundly general statements related to the idea of dental bridges.

WO2021048674 A1discloses a dental zirconia mill blank comprising a porous zirconia material, the porous zirconia material comprising Zr oxide, Y oxide, optionally Al oxide, Bi oxide, Tb oxide, Er oxide, Cr oxide, the porous zirconia material not comprising Fe oxide calculated as Fe₂O₃ of more than 0.01 weight.%, Mn oxide calculated as MnO₂ of more than 0.005 weight.%, Co oxide calculated as Co₂O₃ of more than 0.005 weight.%, weight.% with respect to the weight of the porous zirconia material. The invention also relates to a process of producing such a dental zirconia mill blank and a dental restoration which can be machined from the dental zirconia mill blank. Further, the invention relates to a kit of parts comprising such a dental zirconia mill blank and a dental cement. There is suggested that the blank may be used for making dental bridges, but the idea has not been elaborated on in the patent specification. No concrete data in respect of that are included nor the intricacies of the product and its manufacturing method are contained.

EP 3076894 B1 discloses a coloured zirconia ceramic dental mill blank having fluorescing properties, processes of production of such a mill blank and uses thereof, in particular for producing zirconia ceramic dental restorations. There is suggested that the blank may be used for making dental bridges, but the idea has not been elaborated on in the patent specification. The patent is lacking in any specific and enabled description of the product and its manufacturing method.

It is commonly known that transposition of a one member product and its production to a multi-member scale is not always straightforward and obvious. A lot of parameters need to considered and numerous obstacles need to be overcome. It is an object of the present invention to introduce a blank for use in preparing a dental framework, preferably a dental bridge, wherein all technical aspects, characteristics and contents of the said blank are elaborated on, described, depicted, optimised and defined.

It is an object of the present invention to introduce a blank for use in preparing a dental restoration, in particular a dental bridge, wherein the shade gradient in any area of the final sintered dental restoration is continuous and not visible for the human eye.

Restoration in the sense of the present invention is a dental restoration.

Transition region in the sense of the present invention is a region with a concentration gradient of at least one shading oxide.

Metal element in the sense of the present invention is a metal element according to the periodic table of chemical elements.

### DESCRIPTION OF THE FIGURES

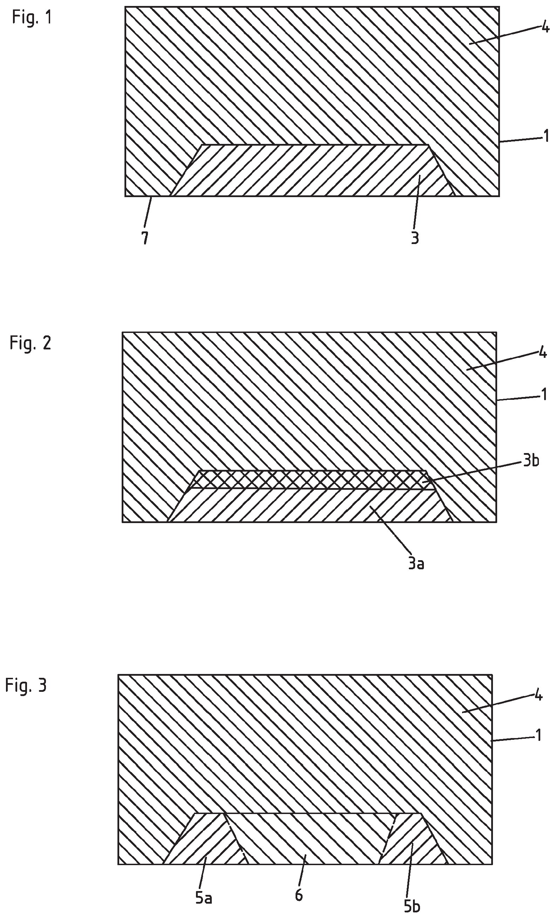

Fig. 1 depicts a cross-section view of the blank (1) comprising a core region (3), a shell region (4) and the base region (7).
Fig. 2 depicts a cross-section view of the blank (1) comprising a shell region (4), and two layers of the core region, (3a) and (3b).
Fig. 3 depicts a cross-section view of the blank (1) comprising a core region and a shell region (4), wherein the core region comprises a molar basic body having a substantially conical shape (5a) and an anterior basic body having a substantially conical shape (5b) and a basic body having a substantially trapezoidal shape (6).

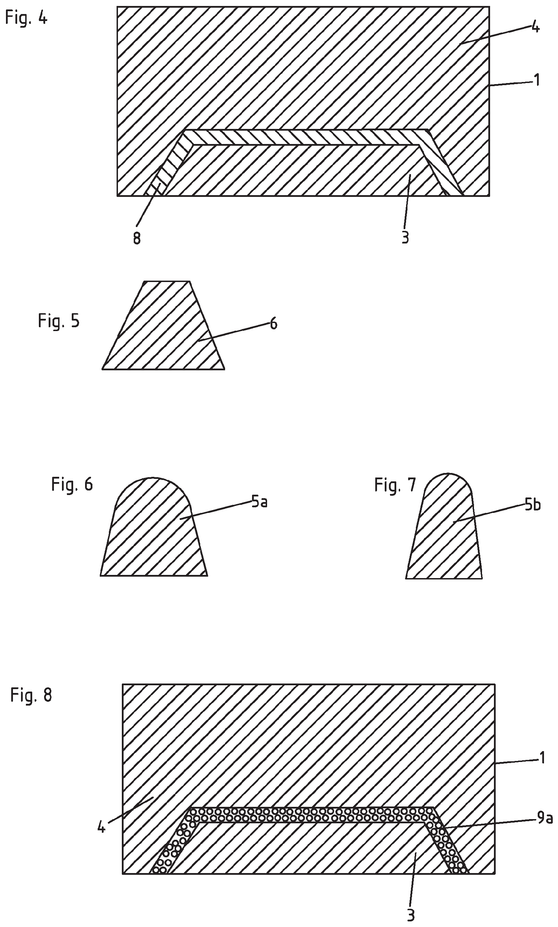

Fig. 4 depicts a cross-section view of the blank (1) comprising a core region (3), a shell region (4) and an intermediate layer (8).
Fig. 5 depicts a cross-section view of a basic body having a substantially trapezoidal shape (6).
Fig. 6 depicts a cross-section of the molar basic body having a substantially conical shape (5a).
Fig. 7 depicts a cross-section of the anterior basic body having a substantially conical shape (5b).
Fig. 8 depicts a cross section view of the blank (1) comprising a core region (3), a shell region (4) and a transition region (9a).

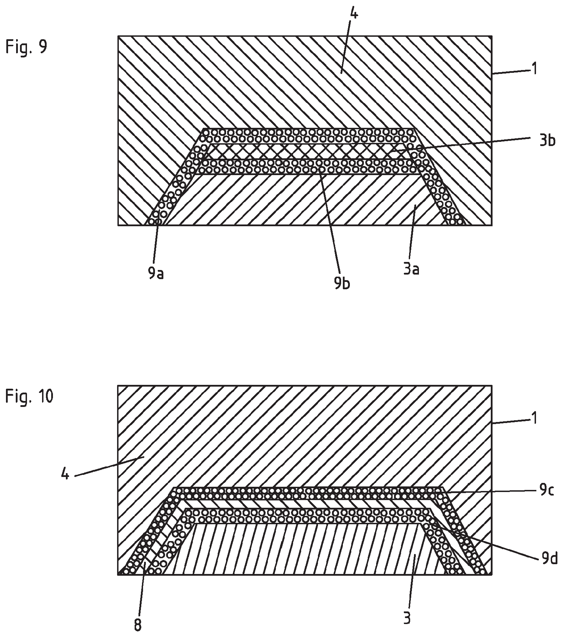

Fig. 9 depicts a cross section view of the blank (1) comprising two layers of the core region (3a) and (3b), a shell region (4), a transition region (9a) and a transition region (9b).
Fig. 10 depicts a cross section view of the blank (1) comprising a core region (3), a shell region (4), an intermediate layer (8) and transition regions (9c) and (9d).

### DETAILED DESCRIPTION OF THE INVENTION

The present invention relates to a blank (1) for use in preparing a dental restoration (2) such as a dental framework, a crown or a dental bridge, wherein the blank comprises zirconium dioxide stabilized with at least one stabilizing oxide,
wherein the blank comprises a core region (3), a shell region (4) and at least one transition region selected from the group comprising (9a), (9b), (9c) and (9d),
wherein the core region (3) extends within the shell region (4) and has an external geometry that tapers from the base region (7) or a base surface,
wherein the core region (3) and the shell region (4) comprise each at least one shading oxide of at least one metal element.

The present invention relates to a blank (1) for use in preparing a dental restoration (2) such as a dental framework, in particular a dental bridge, wherein the blank comprises zirconium dioxide stabilized with at least one stabilizing oxide,
wherein the blank comprises a core region (3), a shell region (4) and at least one transition region selected from the group comprising (9a), (9b), (9c) and (9d),
wherein the core region (3) comprises at least one basic body having a substantially conical shape (5) and at least one basic body having a substantially trapezoidal shape (6),
wherein the at least one basic body having a substantially conical shape (5) and the at least one basic body having a substantially trapezoidal shape (6) are merged one into another,
wherein the core region (3) extends within the shell region (4) and has an external geometry that tapers from the base region (7) or a base surface,
wherein the core region (3) and the shell region (4) comprise each at least one shading oxide of at least one metal element.

The at least one basic body having a substantially conical shape (5) reflects a slightly conical shape of the natural tooth.

In the preferred embodiment of the present invention, the blank (1) comprises a transition region (9a) between the core region (3) and the shell region (4).

In one of the embodiments of the present invention, comprises the core region (3) at least two layers (3a), (3b).

In the preferred embodiment of the present invention, the blank (1) comprises a transition region (9b) between the at least two layers (3a) and (3b) of the core region.

The blank (1) may comprise an intermediate layer (8), wherein the intermediate layer (8) comprises the at least one shading oxide of the at least one metal element.

In one of the embodiments of the present invention, the blank (1) comprises a transition region (9c) between the shell region (4) and the intermediate layer (8) and a transition region (9d) between the core region (3) and the intermediate layer (8).

During the sintering process, at approx. 1200- 1800°C, molecules of the at least one shading oxide diffuse by a solid-state diffusion process. It means that they migrate. This causes the concentration of the shading oxide to change. At least one transition region selected from the group comprising (9a), (9b), (9c) and (9d) is formed with a concentration gradient of the at least one shading oxide. The concentration gradient of the at least one shading oxide creates a shade gradient.

The composition and the size of the at least one transition region depends on the concentration of the at least one shading oxide in the core region (3), the shell region (4) and optionally also in the intermediate layer (8). The difference in the concentration of the at least one shading oxide between any of the core region (3), the shell region (4) and the intermediate layer (8) is preferably lower than or equal to 2000ppm. If the difference in the concentration is higher than 2000 ppm, the human eye can still distinguish between the single regions and layers, which is undesirable in both the blank (1) and the dental restoration (2). If the difference in the concentration is lower than or equal to 2000ppm, the gradient is homogenous and the human eye cannot distinguish between the single regions and layers, which is desirable in both the blank (1) and the dental restoration (2).

The Table 1 depicts concentration of single shading oxides in single regions of the blank (1) in ppm :

**Table 1: Concentration of single shading oxides in single blank regions (ppm)**

| Oxide | Core region before sintering | Shell region before sintering |
|---|---|---|
| Fe2O3 | 750 | 600 |
| Er2O3 | 3750 | 2250 |
| Co3O4 | 11 | 30 |

The composition and the size of the at least one transition region also depends on which of the at least one shading oxide has been used in a particular region or layer.

In addition to this, the composition and the size of the at least one transition region depends on selected sintering temperature. If the sintering temperature is too high, the at least one transition region will be too thick. If the sintering temperature is too low, the at least one transition region is too thin. An optimal thickness of the at least one transition region is obtained when the sintering temperature is of 1250-1600° C.

The composition and the size of the at least one transition region also depends on the sintering time. The higher the sintering time is , the lower temperature is used during sintering and the at least one transition region is thinner.

The preferred thickness of the at least one transition region is in the range of 0.01-0.5mm.

In the preferred embodiment of the present invention is the at least one basic body having a substantially conical shape (5) rotationally symmetrical.

In one of the embodiments of the present invention, the at least one basic body having a substantially conical shape is selected from the group comprising a molar basic body having a substantially conical shape (5a) and an anterior basic body having a substantially conical shape (5b).

In the preferred embodiment of the present invention, the molar basic body having a substantially conical shape (5a) has a smaller diameter of 8-14 mm and a larger diameter of 10-16mm. In another preferred embodiment of the present invention, the anterior basic body having a substantially conical shape (5b) has a smaller diameter of 6-10 mm and the larger diameter of 8-12mm.

In another embodiment of the present invention, the basic body having a substantially conical shape (5) has a height of 8-12 mm, preferably of 10mm.

In the preferred embodiment of the present invention is the blank (1) rotationally asymmetrical.

In one embodiment of the present invention, the shape of the blank (1) is cylindrical, and the core region (3) reflects the shape of the human jaw, wherein the blank has preferably a diameter of 30 - 50 mm and a height of 15 - 25 mm.

In another aspect of the present invention, the blank (1) is preferably cuboidal and the core region (3) reflects the shape of the human jaw, wherein the blank has preferably a length of 40-60 mm, width of 20-30 mm and a height of 18-25 mm.

In the preferred embodiment of the present invention, the at least one basic body having a substantially conical shape (5) and the at least one basic body having a substantially trapezoidal shape (6) are arranged in the core (3) of the blank (1) in one of the following orders:
a. (5)-(6)-(5)
b. (5)-(5)-(6)-(5)
c. (5)-(6)-(6)-(5)
d. (5)-(6)-(5)-(6)-(5)
e. (5)-(6)
f. (5)-(6)-(6)
g. (5)-(5)-(6)-(6)
h. (5)-(5)-(6)

In another preferred embodiment of the present invention, a molar basic body having a substantially conical shape (5a), an anterior basic body having a substantially conical shape (5b) and a basic body having a trapezoidal shape (6) are arranged in the core (3) of the blank (1) in the following order:
(5a)-(6)-(5b).

In the preferred embodiment of the present invention, the transmittance of the shell region (4) is higher than the transmittance of the core region (3) by at least 2%, preferably by 4-5%, measured at 600 nm on a 1mm thick sample.

In the preferred embodiment of the present invention, the shell region (4) is less chromatic than the core region (3), calculated with a chroma (a*, b*, C*ab, L*) by CIELAB colorimetric system. The L*a*b* colorimetric system was standardized in 1976 by Commission Internationale de I'Eclairage (CIE). In the system, a lightness/brightness is defined as L* and expressed by a numerical value of from 0 to 100, in which L*=0 means that the color is complete black, and L*=100 means that the color is complete white.

The refractive index of the shell region (4) and the core region (3) are preferably identical, the said refractive index being preferably from 2.05 to 2.2 at 600 nm measured on 4mm thick samples.

The blank (1) as defined above, wherein the at least one stabilizing oxide is an oxide of the elements selected from the group comprising Y, Er, Ca, Gd, Mg, Yb, Dy, Ce, Nb or their combinations.

In the preferred embodiment of the present invention, the amount of the at least one stabilizing oxide in the core region (3) is lower than in the intermediate layer (8), whereas the amount of the at least one stabilizing oxide in the intermediate layer (8) is lower than in the shell region (4), based on weight%.

The amount of the at least one stabilizing oxide in the blank (1) is preferably from 2-20 weight%, more preferably 3-15% weight% , most preferably 5-10%weight%, based on the total weight of the blank.

In another embodiment of the present invention, the at least one shading oxide is a shading oxide of at least one metal element selected from the group comprising Fe, Er, Ti, V, Cu, Ni, Cr, Pr, Tb, Co, Ni, Mn or their combinations.

In one of the embodiments of the present invention, are the at least one shading oxide of the shell region (4) and the at least one oxide of the core region (3) not identical.

In the preferred embodiment of the present invention, the concentration of the at least one shading oxide of at least one metal element selected from the group comprising Fe, Er, Ti, V, Cu, Pr and Tb or their combinations is higher in the core region (3) than in the shell region (4), based on ppm.

In the preferred embodiment of the present invention, the concentration of the at least one shading oxide of at least one metal element selected from the group comprising Mn, Co, Cr and Ni or their combinations is higher in the shell region (4) than in the core region (3), based on ppm.

In one of the embodiments of the present invention, the shell region (4) comprises a higher concentration of the at least one shading oxide than the core region (3), based on ppm.

In one of the preferred embodiment of the present invention, the shell region (4) comprises a lower concentration of the at least one shading oxide than the core region (3) based on ppm.

The blank as described above comprising preferably at least 51% of the tetragonal crystal phase of zirconium dioxide, based on weight%.

In another embodiment of the present invention, the core region (3) and/or the intermediate layer (8) comprise at least one fluorescent agent. In case the at least one fluorescent agent is Bi2O3 and/or Tm2O3, the at least one shading oxide is different from any of the oxides of Fe.

The present invention discloses a dental restoration (2) in particular a dental bridge, prepared from the blank as defined above, wherein the restoration (2) is formed monolithically.

The following are clauses describing embodiments of the invention. They are not claims.

Clause 1: A blank (1) for use in preparing a dental restoration (2) such as a dental framework, in particular a dental bridge, wherein the blank comprises zirconium dioxide stabilized with at least one stabilizing oxide,
wherein the blank comprises a core region (3), a shell region (4) and at least one transition region selected from the group comprising (9a), (96 ), (9c) and (9d), wherein the core region (3) comprises at least one basic body having a substantially conical shape (5) and at least one basic body having a substantially trapezoidal shape ( 6), wherein the at least one basic body having a substantially conical shape ( 5) and the at least one basic body having a substantially trapezoidal shape ( 6) are merged one into another,
wherein the core region (3) extends within the shell region ( 4) and has an external geometry that tapers from the base region (7) or a base surface,
wherein the core region (3) and the shell region ( 4) comprise each at least one shading oxide of at least one metal element.

Clause 2: The blank according to clause 1, wherein the blank comprises a transition region (9a) between the core region (3) and the shell region (4).

Clause 3: The blank of clause 1-2, wherein the core region (3) comprises at least two layers (3a), (3b).

Clause 4 :The blank according to clause 3 , wherein the blank comprises a transition region
(9b) between the at least two layers (3a) and (3b) of the core region.

Clause 5: The blank of clause 1 -4, wherein the blank comprises an intermediate layer (8) comprising the at least one shading oxide of the at least one metal element.

Clause 6: The blank of clause 5, wherein the blank comprises a transition region (9c) between the shell region (4) and the intermediate layer (8) and a transition region (9d) between the core region (3) and the intermediate layer (8).

Clause 7: The blank of clause 1 -6, wherein the at least one basic body having a substantially conical shape (5) is rotationally symmetrical.

Clause 8: The blank of clause 1-7, wherein the at least one basic body having a substantially conical shape is selected from the group comprising a molar basic body having a substantially conical shape (5a) and an anterior basic body having a substantially conical shape (5b).

Clause 9: The blank of clause 8, wherein the molar basic body having a substantially conical shape (5a) has a smaller diameter of 8-14 mm and a larger diameter of 10-16 mm.

Clause10: The blank of clause 8, wherein the anterior basic body having a substantially conical shape (5b) has a smaller diameter of 6-10 mm and the larger diameter of 8-12 mm.

Clause 11: The blank according to clause 1-10, wherein the basic body having a substantially conical shape ( 5) has a height of 8-12 mm.

Clause 12: The blank according to any of the preceding clauses, wherein the blank (1) is rotationally asymmetrical.

Clause 13: The blank according to clause 1-12, wherein the shape of the blank (1) is cylindrical and the core region (3) reflects the shape of the human jaw.

Clause 14: The blank according to clause 13, wherein the blank (1) has a diameter of 30 - 50 mm and a height of 15 - 25 mm.

Clause 15: The blank according to clauses 1-12, wherein the shape of the blank (1) is cuboidal and the core region (3) reflects the shape of the human jaw.

Clause 16: The blank according to clause 15, wherein the blank (1) has a length of 40 - 60 mm, a width of 20-30 mm and a height of 18 - 25 mm.

Clause 17: The blank according to clauses 1-16, wherein the at least basic body having a substantially conical shape (5) and the at least one basic body having a substantially trapezoidal shape (6) are arranged in the core region (3) of the blank
(1) in one of the following orders:
   i.(5)-(6)-(5)
   j. (5)-(5)-(6)-(5)
   k. (5)-(6)-(6)-(5)
   l. (5)-(6)-(5)-(6)-(5)
   m. (5)-(6)
   n. (5)-(6)-(6)
   o. (5)-(5)-(6)-(6)
   p. (5)-(5)-(6)

Clause 18: blank according to any of the preceding clause, wherein the transmittance of the shell region (4) is higher than the transmittance of the core region (3) by at least 2% measured at 600 nm on a 1mm thick sample.

Clause 19: The blank of clause 18, wherein the transmittance of the shell region (4) is higher than the transmittance of the core region (3) by 4-5% measured at 600 nm on a 1mm thick sample.

Clause 20: The blank according to any of the preceding clauses, wherein the shell region (4) is less chromatic than the core region (3), calculated with a chroma (a*, b*, C*ab, L*) by CIELAB colorimetric system.

Clause 21: The blank according to any of the preceding clauses, wherein the refractive index of the shell region (4) and of the core region (3) are identical.

Clause 22: The blank according to clause 21, wherein the refractive index is from 2.05 to 2.2 at 600 nm measured on 4 mm thick samples.

Clause 23: The blank according to any of the preceding clauses, wherein the at least one stabilizing oxide is an oxide of the elements selected from the group comprising Y, Er, Ca, Gd, Mg, Yb, Dy, Ce, Nb or their combinations.

Clause 24: The blank according to clause 23, wherein the amount of the at least one stabilizing in the core region (3) is lower than in the intermediate layer (8), whereas the amount of the at least one stabilizing oxide in the intermediate layer (8) is lower than in the shell region (4), based on weight%.

Clause 25: The blank according clauses 23-24, wherein the amount of the at least one stabilizing oxide in the blank (1) is 2-20 weight%, based on the total weight of the blank.

Clause 26: The blank according to any of the preceding clauses, wherein the at least one metal element of the at least one shading oxide is selected from the group comprising Fe, Er, Ti, V, Cu, Ni, Cr, Pr, Tb, Co, Ni, Mn or their combinations.

Clause 27: The blank according to clause 26, wherein the at least one shading oxide of the shell region (4) and the at least one shading oxide of the core region (3) are not identical.

Clause 28:The blank according to clause 27, wherein the core region (3) comprises higher concentration of at least one shading oxide of at least one metal element selected from the group comprising Fe, Er, Ti, V, Cu, Pr, and Tb or their combinations than the shell region (4), based on ppm.

Clause 29: The blank according to clauses 27-28, wherein the shell region (4) comprises higher concentration of at least one shading oxide of at least one the metal element selected from the group comprising Mn, Co, Cr and Ni or their combinations, than the core region (3), based on ppm.

Clause 30: The blank according to clauses 5-29, wherein the difference in the concentration of the at least one shading oxide between any of the core region (3), the shell region (4) and the intermediate layer (8) is lower than or equal to 2000 ppm.

Clause 31: The blank according to any of the preceding clauses, wherein the thickness of the at least one transition region is in the range of 0.01-0.5 mm.

Clause 32: The blank according to any of the preceding clauses, wherein the blank comprises at least 51% of the tetragonal crystal phase of zirconium dioxide, based on weight%.

Clause 33: The blank according to any of the preceding clauses, wherein the core region (3) and/or the intermediate layer (8) comprise at least one fluorescent agent.

Clause 34: The blank according to clause 33, wherein the at least one fluorescent agent is Bi203 and/or Tm203 and the at least one shading oxide is different from any of the oxides of Fe.

Clause 35: A dental restoration (2) in particular a dental bridge, prepared from the blank according to clauses 1-34, wherein the dental restoration (2) is formed monolithically.

## Claims

1. A blank (1) for use in preparing a dental restoration (2) such as a dental framework, in particular a dental bridge, wherein the blank comprises zirconium dioxide stabilized with at least one stabilizing oxide,
the blank comprising:
(i) a core region (3),
(ii) a shell region (4),
(iii) an intermediate layer (8) between the core region (3) and the shell region (4), and
(iv) at least one transition region (9a), (9b), (9c) and (9d);
wherein the core region (3) comprises at least one basic body having a substantially conical shape (5) and at least one basic body having a substantially trapezoidal shape (6), wherein the at least one basic body having a substantially conical shape (5) and the at least one basic body having a substantially trapezoidal shape (6) are merged one into another,
wherein the core region (3) extends within the shell region (4) and has an external geometry that tapers from a base surface (7),
wherein the core region (3), the shell region (4) and the intermediate layer (8) each comprises at least one shading oxide of at least one metal element.

2. The blank according to claim 1, wherein the core region (3) comprises at least two layers (3a), (3b), wherein the at least one transition region includes a transition region (9b) between the at least two layers (3a) and (3b) of the core region.

3. The blank according to claim 1 or 2, wherein the at least one transition region comprises a transition region (9c) between the shell region (4) and the intermediate layer (8) and a transition region (9d) between the core region (3) and the intermediate layer (8).

4. The blank according to any one of claims 1-3, wherein the at least one basic body having a substantially conical shape (5) is rotationally symmetrical.

5. The blank according to any one of claims 1-4, wherein the at least one basic body having a substantially conical shape includes a molar basic body having a substantially conical shape (5a) and an anterior basic body having a substantially conical shape (5b), wherein the molar basic body tapers between a smaller diameter of 8-14 mm and a larger diameter of 10-16 mm, and wherein the anterior basic body tapers between a smaller diameter of 6-10 mm and a larger diameter of 8-12 mm.

6. The blank according claim 4, wherein the basic body having a substantially conical shape (5) has a height of 8-12 mm.

7. The blank according to any of the preceding claims, wherein the blank (1) is rotationally asymmetrical.

8. The blank according to claims 1-5, wherein a shape of the blank (1) is cylindrical, and the core region (3) reflects a shape of a human jaw, wherein the blank (1) has a diameter of 30- 50 mm and a height of 15- 25 mm.

9. The blank according to any of the preceding claims, wherein a transmittance of the shell region (4) is higher than a transmittance of the core region (3) by at least 2% measured at 600 nm on a 1 mm thick sample.

10. The blank according to any of the preceding claims, wherein the shell region (4) is less chromatic than the core region (3), calculated with a chroma (a*, b*, C*ab, L*) by CIELAB colorimetric system.

11. The blank according to any of the preceding claims, wherein a refractive index of the shell region (4) and of the core region (3) are identical, wherein the refractive index is from 2.05 to 2.2 at 600 nm measured on 4 mm thick samples.

12. The blank according to any one of the preceding claims, wherein a difference in a concentration of the at least one shading oxide between any of the core region (3), the shell region (4) and the intermediate layer (8) is lower than or equal to 2000 ppm.

13. The blank according to any of the preceding claims, wherein a thickness of the at least one transition region is in the range of 0.01-0.5 mm; and wherein the blank comprises at least 51% of the tetragonal crystal phase of zirconium dioxide, based on weight%.

14. The blank according to any of the preceding claims, wherein at least one of the core region (3) and the intermediate layer (8) comprise at least one fluorescent agent.
